# EUROPEAN PATENT SPECIFICATION

(11) **EP 1 803 071 B1**
(45) Date of publication and mention of the grant of the patent: **27.04.2016**
(21) Application number: 05794733.5
(22) Date of filing: 18.10.2005
(51) Int. Cl.: G06F 17/30

(54) **A SPATIAL AGGREGATOR SYSTEM FOR PROVIDING INFORMATION**
RÄUMLICHES AGGREGATORSYSTEM ZUR BEREITSTELLUNG VON INFORMATIONEN
SYSTEME D'AGREGATION SPATIALE PERMETTANT DE FOURNIR DES INFORMATIONS

(30) Priority: 21.10.2004 GB 0423315
(43) Date of publication of application: 04.07.2007
(73) Proprietor: mx-Data-Technologies Limited, Wilmslow Cheshire SK9 1AT (GB)
(72) Inventor: CUTHBERT, Adrian, Impington, Cambridge CB4 9YX (GB)
(74) Representative: ip21 Ltd
(86) International application number: PCT/GB2005/004011
(87) International publication number: WO 2006/043047

(56) References cited:
- WO-A-02/058426
- WO-A-02/097726
- US-A1- 2003 004 743
- US-B1- 6 741 980

## Description

### Field of the Invention

The invention relates to information providing systems. These systems may have a wide variety of applications from desktop to mobile unit applications.

Whilst in the following specification a mobile phone is used to describe a particular application of the invention, the invention also relates to fixed and mobile receiving units of all kinds including desktop computers, laptops, PDAs (personal digital assistants such as Palm Pilots (registered trade mark)) or the like, as well as vehicles or boats which are then mobile receiving units.

### Backgound to the Invention and Prior Art known to the Applicant(s)

The invention (sometimes referred to as a 'spatial aggregator') makes it easy for people ('publishers') to publish information relating to real-world locations and for other people ('users') to discover information about a specified locality. Information relating to a real-world location is sometimes referred to as spatial information. The invention plays a similar role to 'search engines' such as Google (registered trade mark) and Yahoo (registered trade mark). Consequently the closest prior art may be found in search engines.

Search engines build an index of the web by 'crawling' web sites and retrieving and indexing individual web pages. The languages used to describe web pages (e.g. HTML) carry textual content together with mark-up which describes how the content should be presented. This allows different parts of a page to be identified and, if required, treated differently. For example it would be possible to identify the title of a web page and give words appearing in a page title more 'importance' than words appearing in the body of the page.

The crawling process itself involves following 'links' found on a web page to find new web pages. However it is difficult for the crawling process to retrieve web pages which, under normal browsing circumstances, would be generated in response to user input. For example it may be necessary for a user to type in the name of a railway station to gain access to the web page showing the timetable for the specified station. Thus, without knowledge of the correct railway station names, it is not possible for the crawling process to find the timetable pages.

Search engines may return spatial information in response to a user who includes a geographical reference in their search query, such as the word 'Brazil' in the query 'Brazil nuts'. Conceptually, the search engine finds all web pages that relate to the word 'Brazil' and all those relating to the word 'nuts' and then orders them according to some function of their match with the query and global criteria, such as the relative importance of the web page on the web as a whole. This approach does not require a search engine to understand that the word 'Brazil' relates to a specific locality any more than the word 'nuts' does.

More recently search engines have included options for 'local' search. In local search part of the search query is expected to include words that relate specifically to location. Indeed in most incarnations the user is presented with two text boxes to fill out denoted 'What' and 'Where'. To support local search, it is necessary to extract more information from a web page when it is originally 'crawled'. A search engine must first determine if a spatial reference is present in a web page and if so what location it refers to. It must do this based on content and mark-up that has been written primarily for presentation purposes. Unlike the title of a page, spatial references in the body of the page cannot be easily identified.

The invention differs from this 'traditional' form of local search in the technical system employed to gather the spatial information.

The following prior art document is acknowledged: US6,741,980. This prior art document presents a complex multi-tiered system requiring parsing to segregate data into multiple parallel databases or channels.

### Summary of the Invention

In its broadest independent aspect, the invention provides an information providing system, comprising means for reading feeds from a plurality of content sources (2, 3, 4), one or more of said feeds having content; said system being configured to receive a request from a user, characterised in that said feeds (5) include a mark-up that directly identifies a location; the system further comprises a spatial model (1, 6) which is common to all content sources (2, 3, 4); said spatial model receiving a number of entries where each entry incorporates a spatial reference; and said system further comprises means for populating said spatial model from such spatially referenced feed entries allowing all content to be queried spatially, said system being configured to assess a user's interest, following the receipt of said request (10), by matching a user's interest to content held in said spatial model, and to respond by sending entries matching the user's request; whereby the user receives content provided from said spatial model which closely matches the user's spatial interest.

In one aspect, the inventive system comprises means for reading feeds specifically designed to be aggregated by machine. In a subsidiary aspect, such feeds are available from modern personal publishing tools, sometimes referred to as blog authoring tools, which generate both a human readable web-site and a machine readable feed.

Languages used to describe web pages (e.g. HTML) carry textual content together with mark-up which describes how the content should be presented. Languages used to implement feeds (e.g. RSS and Atom) carry textual content together with mark-up which describes what the content means.

The inventive system allows both the publisher and the user to use a range of types of spatial reference to identify locations and specify localities. This optionally includes specifying a location/locality using coordinates within a specified coordinate reference system. It also optionally includes specifying a location/locality using an address. The ability to work with multiple types of spatial reference minimises the geospatial expertise required by the publisher, making it easier to publish spatial information. It also minimises the geospatial expertise required by users making spatial information more accessible.

In one aspect, the inventive system may convert all published information and queries into a common coordinate reference system using the techniques of geocoding and reverse-geocoding where necessary.

The combination of features defined in the invention's broadest independent aspect is particularly inventive because it allows a user to receive immediately relevant information to his/her particular interest. For example, if a user sends a query to the system of the following kind: "What eating places are in close proximity?", the system would send information specific to the location of the user without sending all the addresses in say Cambridge which would be impossible for a user to assess or requiring the user to know what post code/street he/she is in at the time of querying. The information provided is therefore precisely spatially relevant and straight forward for a user to assess. This system has particular benefits for mobile phone applications but may also be advantageous for desktop applications. The invention is particularly advantageous because in one aspect it gathers spatial information by reading feeds which includes mark-up that directly identifies an associated location. That is the publisher has explicitly specified an association with a location. Furthermore the publisher has identified the location using a spatial reference with a well-defined interpretation. This is in contrast to traditional local search where the search engine must first determine if a spatial reference is present in a page and if so what location it refers to. It must do this based on content and mark-up that has been written primarily for presentation purposes. As a consequence the results of the invention are less prone to error.

Furthermore, through the use of a feed, the publisher is able to describe content that may not be accessible to standard 'web-crawling' techniques used by traditional search engines.

For example a publisher can provide information about deep-linked resources that would ordinarily require a user to supply some input before gaining access.

Furthermore, through the use of standard technologies related to the publishing of a feed, the publisher is able to notify the inventive system (or have the inventive system discover) new content in a timely manner. This means that feeds can deliver information about short-lived content that would normally be out of date before it became accessible via a traditional search engine.

In a subsidiary aspect in accordance with the invention's broadest independent aspect, the system is set to regularly poll feeds to build up a database of spatially referenced content. This would be particularly advantageous as it will allow a user to readily obtain relevant data from sources of interest and relevant to the spatial enquiries of a user. This would also allow current information to be readily obtainable by the user. The database may bye interrogated without further access to the original information source. This may be particularly useful when connections to the source are not available in real time for any reason.

In a further subsidiary aspect, the system is configured to respond to a user's interest when it includes a spatial reference such as a postcode and/or keywords and/or spatial coordinates.

In a further subsidiary aspect, the system is configured to respond to a user's interest when it includes a time and/or date of interest.

In a further subsidiary aspect, the system is configured to respond to a user's interest when it includes personal information relating to the user, such as a profile representing their interests and/or their interest in specific feeds and/or semantically tagged spatial references for locations such as "home" and "office".

In a further subsidiary aspect, the system assesses a multiplicity of spatial references such as post codes and/or keywords and/or spatial coordinates contained in the feeds' entries. This approach avoids the provider to necessarily adopt an industry wide standard. The system will thus be able to assess a variety of feed types.

In a further subsidiary aspect, the provider of the feeds assigns a time-based spatial reference to entries contained within the feeds. This allows more relevant information to be identified rapidly.

In a further subsidiary aspect, the provider of the feeds assigns classification information to entries contained within the feeds.

In a further subsidiary aspect, the provider of the feeds assigns labelling information and/or information relating to a graphic representation (for example 'icons') such that the entry can be represented in a human-readable form either textually on a page or graphically in an image.

In a further subsidiary aspect, the source provider of the feeds assigns a deep-link to entries contained within the feeds so that the human-readable form of an entry can be 'linked' to further information. This allows further information to be retrieved about said entry using standard Internet-based techniques.

In a further subsidiary aspect, means are provided to store the information in categories and record previously accessed information, whereby the system selects information according to previously recorded interests. This also allows information of greater relevance to be provided to a user, particularly when a user information request is broad such as "Restaurants in Soho".

In a further subsidiary aspect, the system is embodied in a mobile guidance system comprising a mobile receiving unit for receiving and displaying location indications; processing means located remotely from said mobile receiving unit; means allowing remote communication between said unit and said processing means and means for determining the user's specific spatial position; characterised in that said processing means assess determined user specific spatial positions with user's interest criteria in order to provide the user with access to a display of location indications and user interest information.

This system has a number of advantages such as, if a mobile user is interested in receiving up to date train times for a given destination, the system allows a map of the location of a train station and the user's interest criteria to be displayed concurrently. The user may for example not be interested in MacDonalds, Supermarkets or other locations close by on his/her way to the train station. The display of carefully selected information in this manner minimises the information to be displayed in a user specific manner in order to improve the display particularly on small-scale mobile phone units.

In a further subsidiary aspect, the communication between the unit and the processing means employs means for updating in real time both the user interest information and location indications displayed. This would for example allow a correct minimal train timetable to be displayed alongside the map. This could take into account of train delays etc allowing users for example to step inside an out-of-station coffee shop without actually reaching the station if a train delay is signalled.

In a further subsidiary aspect, the processing means store the information in categories and record previously accessed information, whereby the system selects the display according to previously recorded interests. This allows specific tailoring of the information sent for display both minimising the display of information which would not be of interest to the user and therefore maximising clarity of displays and their overall usefulness.

In a further subsidiary aspect, means are provided to allow the user to block certain displays.

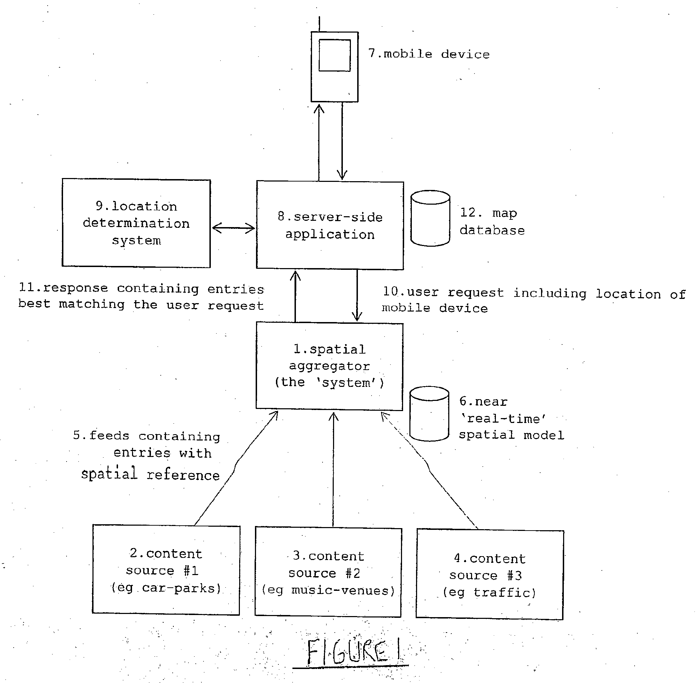

### Description of Figure 1

Figure 1 shows a flow diagram of an arrangement using a spatial aggregator.

The spatial aggregator 1 polls content sources 2, 3 and 4 and gets, by way of response, feeds containing entries with spatial references 5. The spatial aggregator uses these to populate a spatial model 6. The user makes a request from their mobile device 7 to a server-side application 8. This uses a location determination system 9 to get the approximate location of the user. The application then makes a request on behalf of the user (the user's request 10) to the spatial aggregator 1 containing the user's approximate location. The spatial aggregator determines which entries in the spatial model 6 best match the user's request and sends them back in a response 11 to the server-side application. The server-side application then renders the information in the response into a page. In conjunction with the map database 12 it constructs a map image. The page and map images are used in the response to the mobile device 7.

According to well established patent practice, figure 1 is one possible illustration of how an inventive spatial aggregator 1 might be used (The scope of the invention being defined in the Claims that follow this description). For example, the user request 10 may originate from a desktop application or a Java application resident on a mobile device (rather than a combination of mobile device 7 and server-side application 8) using a location obtained by looking up an address rather than from a location determination system 9.

In the embodiment of figure 1, a user employs a mobile phone having a mobile receiving unit. When a user activates the system a user locator which may use any known spatial position determining technology identifies the approximate mobile phone position. The position of the user is then matched with spatially referenced content obtained by the aggregator in order to furnish the user with specific spatial content.

The aggregator will poll information feeds from a number of sources. These feeds deliver spatially referenced content as a set of entries in a machine readable format such as XML which are not end user readable for the purposes of this description. Requests may include information about when the feed was last polled. The system can be configured to handle feeds that return only incremental changes, or feeds that indicate there have been no changes since the specified polling time.

An entry in a feed contains information about something that has an associated location in the real-world. For example a venue such as the 'Albert Hall' has an associated location. Similarly an event such as '2004 Proms' has an associated location and an associated 'period of time'. The location is expressed as a spatial reference. Typically the information also includes some or all of the following: a human readable label, a brief description and one or more 'deep' links that allows more information to be retrieved using standard Internet technologies. The following example shows a possible feed response with a single entry:

```
 <feed>
  <entry>
     <label>Gwen John and Augustus John</label>
     <link>http://www.tate.org.uk/britain/exhibitions/john/</link>
     <description> This is the first major exhibition to focus on the
     work of sibling artists Gwen and Augustus John.</description>
     <spatial_reference>
       <postcode>SW1P 4RG</postcode>
     </spatial_reference>
  </entry>
  </feed>
```

A spatial reference may define a location with high precision (for example a building number and postcode can identify an individual building in the UK) or it may define a location with extent (for example a postcode can be approximated by a point and an associated radius).

Alternate mechanisms for supplying a spatial reference may be used. For example the spatial_reference tag could be used to hold a location specified using geographical coordinates in a default coordinate reference system:

```
 <spatial_reference>
  <geo:lat>51.4909</geo:lat>
  <geo:long>-0.1272</geo:long>
  </spatial_reference>
```

The system may be configured to recognise a number of types of spatial reference and does not rely on the presence of a spatial_reference tag. The system resolves all spatial references into a common spatial model that allows all content to be queried spatially.

Entries may also include information about what the entry represents (for example a classification such as 'car_park', 'train_station', 'music_venue' etc, and/or a set of attributes which combine a name and value where both can be enumerated such as 'category:restaurant', 'cuisine:turkish', 'tag:kebab', 'tag:meze' etc, and/or a flag indicating whether the entry is 'sponsored') and information about how the entry should be rendered. For example, if the entry is to be represented on a map, the entry may include information about what 'icon' to use to represent it. Furthermore this information may include a flag indicating if the 'icon' is dynamic or not. Dynamic icons could be fetched at the time the map is being constructed to ensure the most 'up-to-date' result. Similarly, if the entry is to be represented textually, the entry may include a descriptive fragment, which could be flagged as being a 'dynamic fragment'.

For example consider a fictitious third-party that provides information about car-parks, say Parking4Us. They could provide a feed that gave the locations of a set of car-parks. Each entry would include a unique Internet reference to the 'dynamic icon' to be used to represent that particular car-park. At the time the map is being constructed the icons for the car-parks on the map would be retrieved from the Parking4Us service. These could provide a visual indicator of whether the car-parks are currently full or not.

The system can be configured to poll different feeds at different frequencies. For example a feed containing very dynamic data (for example the location of traffic delays) might be polled every ten minutes. A feed containing very static data (for example what plays are showing at which theatres) might be polled every week. A spatial reference may also include information which defines over what period in time the entry can be considered valid. These two approaches allow the system to build and maintain a near 'real-time' spatial model.

The system responds to requests by returning a set of entries that closely match the user's interest. The user's request includes a spatial reference which is resolved into the same spatial model used when reading the information feeds. The spatial reference need not represent the current location of the user. For example a request originating from a user using a desktop web-browser may include a spatial reference representing a location they are planning on visiting at a later time; whereas a request originating from a user using a mobile device may include a spatial reference representing the location of the mobile device as determined by a location determination system such as a cell-id.

From figure 1, the response from the system 11 is rendered into a suitable form for display by the server-side application 8 for viewing by the user with the mobile device 7. For example the user may see a page listing nearby music venues and cinemas. Each entry in the list might include a link that, when followed, would provide further information about the selected entry. Alternatively the page might include a map image that displays the locations of the music venues and cinemas as icons. Furthermore, the page may include links for entries that cannot be easily represented on the map, for example entries which have a large geographical extent such as the coverage of a radio station.

The user's request may also include a date and time. This need not be the same as the date and time at which the request is being made. Thus a user may make a request about some time and date in the future and receive information about plays that are going to be performed at that time. The server-side application 8 is responsible for constructing the user request 10 and thus needs to provide the user with an interface to select a preferred date and time, although it may default to supplying the current date and time.

The user's request may also include information about the user's profile which allows the system to better match content to the user's interest. This information needs to be used in conjunction with the information about the entries, for example the classification of an entry.

The user's request may also include information related to information feeds. For example, the request may indicate that a user does not want to see any content from a particular feed (a 'blacklist'), or it may indicate that a user is subscribed to premium content from particular feeds, or it may indicate that the user only wishes to see content from selected feeds. This mechanism can also be used to allow user requests to inform the system about new feeds that it should read. If the system is configured to recognise certain feeds as delivering only premium content, then such content will only be included in responses to user requests which indicate the user is subscribed to that content. It should be noted that 'dynamic icons' or 'dynamic fragments' may produce different results for subscribed and unsubscribed users. Alternatively a source of feeds may publish two feeds, one with premium content and one with non-premium content.

Alternatively the system may maintain information related to information feeds on a per-user basis. Thus the user's request need only include a user-identifier.

The system may be configured to return specific mixes of types of entries in its responses. For example the system could be configured to return no more than a certain number of 'car-parks' per request. Alternatively it might be configured to return no-more than one 'sponsored' entry per request.

From figure 1, the user accesses the system 1 via a mobile device 7 and a server-side application 8. The application can be written to provide a near 'real-time' experience by repeatedly making the same user request 10 on behalf of the user to the system. If such requests indicate a time of a previous, identical request, the system need only return entries that have altered since the previous request. This includes new entries which have been added, entries which have changed and entries which have been removed.

User requests to the system may include personalised information such as a set of locations which are known to the user: Such locations would include a spatial reference (such as a keyword and/or a postcode and/or spatial coordinates) and some form of semantic identifier (such as a keyword drawn from a restricted set such as 'home', 'office' etc). This information allows the system to better match content to a user's likely interest. This information may be supplied by the server-side application. Alternatively the system may maintain information related to locations on a per-user basis. Thus, the user's request need only include a user-identifier.

## Claims

1. An information providing system, comprising means for reading feeds from a plurality of content sources (2, 3, 4), one or more of said feeds having content; said system being configured to receive a request from a user, **characterised in that** said feeds (5) include a mark-up that directly identifies a location; the system further comprises a spatial model (1, 6) which is common to all content sources (2, 3, 4); said spatial model receiving a number of entries where each entry incorporates a spatial reference; and said system further comprises means for populating said spatial model from such spatially referenced feed entries allowing all content to be queried spatially, said system being configured to assess a user's interest, following the receipt of said request (10), by matching a user's interest to content held in said spatial model, and to respond by sending entries matching the user's request; whereby the user receives content provided from said spatial model which closely matches the user's spatial interest.

2. A system according to the preceding Claim, which is set to regularly poll feeds to build up a database of spatially referenced content.

3. An information providing system according to either of the preceding Claims, wherein the system is configured to respond to a user's interest when it includes a spatial reference such as a postcode and/or keywords and/or spatial coordinates.

4. An information providing system according to any of the preceding Claims, wherein the system is configured to respond to a user's interest when it includes a time and/or date of interest.

5. An information providing system according to any of the preceding Claims, wherein the system is configured to respond to a user's interest when it includes personal information relating to the user, such as a profile representing their interests and/or their interest in specific feeds and/or semantically tagged spatial references for locations such as 'home' and 'office'.

6. An information providing system according to any of the preceding Claims, wherein the system assesses a multiplicity of spatial references such as post codes and/or keywords and/or spatial coordinates contained in the feeds' entries.

7. An information providing system according to any of the preceding Claims, wherein the provider of the feeds assigns a time-based spatial reference to entries contained within the feeds.

8. An information providing system according to any of the preceding Claims, wherein the provider of the feeds assigns classification information to entries contained within the feeds.

9. An information providing system according to any of the preceding Claims, wherein the provider of the feeds assigns labelling information and/or information relating to a graphic representation such that the entry can be represented in a human-readable form either textually on a page or graphically in an image.

10. An information providing system according to any of the preceding Claims, wherein the source provider of the feeds assigns a deep-link to entries contained within the feeds so that the human-readable form of an entry can be 'linked' to further information.

11. An information providing system according to any of the preceding Claims, wherein means are provided to store the information in categories and/or with associated tags and/or with associated attributes, and record previously accessed information, whereby the system selects information according to previously recorded interests.

12. An information providing system according to any of the preceding Claims, operating in conjunction with a mobile guidance system comprising a mobile receiving unit (7) for receiving and displaying location indications; processing means located remotely from said mobile receiving unit (7); means allowing remote communication between said unit and said processing means and means for determining the user's specific spatial position; **characterised in that** said processing means assesses determined user specific spatial position with user's interest criteria in order to provide the user with access to a display of location indications and user interest information.

13. An information providing system according to Claim 12, wherein the communication between the unit and the processing means employ means for updating in real time both user interest information and location indications displayed.

14. An information providing system according to Claim 12 onwards, wherein means are provided to allow the user to block certain displays.

15. An information providing system according to Claim 2, wherein the system is configured to poll different feeds at different frequencies; and the system contains a near real time spatial model (6).

16. An information providing system according to Claim 1, wherein said feeds are Really Simple Syndication (RSS) feeds.

17. An information providing system according to Claim 1, wherein said feeds are Atom feeds.

## Patentansprüche

1. System zur Bereitstellung von Informationen, umfassend eine Einrichtung zum Lesen von Feeds aus einer Vielzahl von Content-Quellen (2, 3, 4), wobei ein oder mehrere dieser Feeds Content enthalten; wobei das System dazu konfiguriert ist, eine Anforderung von einem Benutzer zu empfangen, **dadurch gekennzeichnet, dass** die Feeds (5) ein Mark-up enthalten, das direkt einen Standort identifiziert; das System des Weiteren ein räumliches Modell (1,6) enthält, das allen Content-Quellen (2, 3, 4) gemeinsam ist; wobei das räumliche Modell eine Anzahl von Einträgen empfängt, wobei jeder Eintrag eine räumliche Referenz verkörpert und das System des Weiteren eine Einrichtung zum Befüllen des räumlichen Modells aus solchen räumlich referenzierten Feed-Einträgen umfasst, wodurch sämtlicher Content räumlich abgefragt werden kann, wobei das System dazu konfiguriert ist, das Interesse eines Benutzers zu beurteilen, nachdem die Anforderung (10) empfangen wurde, indem ein Abgleich zwischen dem Interesse eines Benutzers mit in dem räumlichen Modell gehaltenen Content durchgeführt wird, und zu reagieren, indem zur Anforderung des Benutzers passende Einträge gesendet werden; wodurch der Benutzer aus dem räumlichen Modell bereitgestellten Content empfängt, der dem räumlichen Interesse des Benutzers weitestgehend entspricht.

2. System gemäß dem vorherigen Anspruch, das dazu eingerichtet ist, regelmäßig Feeds abzufragen, um eine Datenbank aus räumlich referenziertem Content aufzubauen.

3. System zur Bereitstellung von Informationen gemäß einem der beiden vorherigen Ansprüche, wobei das System dazu konfiguriert ist, auf das Interesse eines Benutzers zu reagieren, wenn es eine räumliche Referenz wie zum Beispiel eine Postleitzahl und/oder Stichwörter und/oder räumliche Koordinaten enthält.

4. System zur Bereitstellung von Informationen gemäß einem der vorherigen Ansprüche, wobei das System dazu konfiguriert ist, auf das Interesse eines Benutzers zu reagieren, wenn es eine Uhrzeit und/oder ein Datum von Interesse enthält.

5. System zur Bereitstellung von Informationen gemäß einem der vorherigen Ansprüche, wobei das System dazu konfiguriert ist, auf das Interesse eines Benutzers zu reagieren, wenn es persönliche Informationen in Bezug auf den Benutzer enthält, zum Beispiel ein Profil, das seine Interessen repräsentiert und/oder sein Interesse an speziellen Feeds und/oder semantisch getaggte räumliche Referenzen für Standorte wie zum Beispiel 'Zuhause' oder 'Büro'.

6. System zur Bereitstellung von Informationen gemäß einem der vorherigen Ansprüche, wobei das System eine Vielzahl von räumlichen Referenzen beurteilt, wie zum Beispiel Postleitzahlen und/oder Stichwörter und/oder räumliche Koordinaten, die in den Einträgen der Feeds enthalten sind.

7. System zur Bereitstellung von Informationen gemäß einem der vorherigen Ansprüche, wobei der Anbieter der Feeds den in den Feeds enthaltenen Einträgen eine zeitbasierte räumliche Referenz zuweist.

8. System zur Bereitstellung von Informationen gemäß einem der vorherigen Ansprüche, wobei der Anbieter der Feeds den in den Feeds enthaltenen Einträgen Klassifizierungsinformationen zuweist.

9. System zur Bereitstellung von Informationen gemäß einem der vorherigen Ansprüche, wobei der Anbieter der Feeds kennzeichnende Informationen und/oder Informationen bezüglich einer grafischen Repräsentation zuweist, sodass der Eintrag in einer menschlich lesbaren Form repräsentiert werden kann, entweder textlich auf einer Seite oder grafisch in einem Bild.

10. System zur Bereitstellung von Informationen gemäß einem der vorherigen Ansprüche, wobei der Quellanbieter der Feeds in den Feeds enthalten Einträgen einen Deep-Link zuweist, sodass die menschlich lesbare Form eines Eintrags mit weiteren Informationen 'verlinkt' werden kann.

11. System zur Bereitstellung von Informationen gemäß einem der vorherigen Ansprüche, wobei eine Einrichtung bereitgestellt wird, um die Informationen in Kategorien und/oder mit zugeordneten Tags und/oder mit zugeordneten Attributen zu speichern, und um zuvor abgerufene Informationen aufzuzeichnen, wodurch das System Informationen entsprechend zuvor aufgezeichneten Interessen auswählt.

12. System zur Bereitstellung von Informationen gemäß einem der vorherigen Ansprüche, das in Verbindung mit einem mobilen Leitsystem arbeitet, welches umfasst: eine mobile Empfangseinheit (7) zum Empfangen und Anzeigen von Standortangaben; eine Verarbeitungseinrichtung, die sich von der mobilen Empfangseinheit (7) entfernt befindet; eine Einrichung zum Ermöglichen der Fernkommunikation zwischen der Einheit und der Verabeitungseinrichtung und eine Einrichtung zum Ermitteln der konkreten räumlichen Position des Benutzers; **dadurch gekennzeichnet, dass** die Verarbeitungseinrichtung die ermittelte konkrete räumliche Position des Benutzers in Bezug auf Interessenkriterien des Benutzers beurteilt, um dem Benutzer Zugriff auf eine Anzeige von Standortangaben und Benutzerinteresseninformationen zu gewähren.

13. System zur Bereitstellung von Informationen gemäß Anspruch 12, wobei die Kommunikation zwischen der Einheit und der Verarbeitungseinrichtung eine Einrichtung zum Aktualisieren der angezeigten Benutzerinteresseninformationen und Standortangaben in Echtzeit nutzt.

14. System zur Bereitstellung von Informationen gemäß Anspruch 12, wobei eine Einrichtung bereitgestellt wird, die es dem Benutzer ermöglicht, bestimmte Anzeigen zu blockieren.

15. System zur Bereitstellung von Informationen gemäß Anspruch 2, wobei das System dazu konfiguriert ist, verschiedene Feeds in verschiedenen Frequenzen abzufragen, und das System ein räumliches Modell (6) in Beinahe-Echtzeit enthält.

16. System zur Bereitstellung von Informationen gemäß Anspruch 1, wobei die Feeds RSS-Feeds (Really Simple Syndication) sind.

17. System zur Bereitstellung von Informationen gemäß Anspruch 1, wobei die Feeds Atom-Feeds sind.

## Revendications

1. Un système de fourniture d'informations, comprenant un moyen pour lire des flux provenant d'une pluralité de sources de contenu (2, 3, 4), un ou plusieurs desdits flux ayant un contenu ; ledit système étant configuré pour recevoir une requête d'un utilisateur, **caractérisé en ce que** lesdits flux (5) incluent un balisage qui identifie directement une localisation ; le système comprend en outre un modèle spatial (1, 6) qui est commun à toutes les sources de contenu (2, 3,4); ledit modèle spatial recevant un certain nombre d'entrées, chaque entrée incorporant une référence spatiale ; et ledit système comprend en outre un moyen pour charger ledit modèle spatial à partir de telles entrées de flux spatialement référencées permettant à tout le contenu d'être interrogé spatialement, ledit système étant configuré pour évaluer un intérêt d'utilisateur, suite à la réception de ladite requête (10), en mettant en correspondance un intérêt d'utilisateur avec un contenu conservé dans ledit modèle spatial, et pour répondre en envoyant des entrées correspondant à la requête de l'utilisateur ; grâce à quoi l'utilisateur reçoit un contenu fourni à partir dudit modèle spatial qui correspond étroitement à l'intérêt spatial de l'utilisateur.

2. Un système selon la revendication précédente, qui est réglé pour scruter régulièrement des flux pour constituer une base de données de contenu spatialement référencé.

3. Un système de fourniture d'informations selon n'importe lesquelles des revendications précédentes, où le système est configuré pour répondre à un intérêt d'utilisateur quand il inclut une référence spatiale comme un code postal et/ou des mots-clés et/ou des coordonnées spatiales.

4. Un système de fourniture d'informations selon n'importe lesquelles des revendications précédentes, où le système est configuré pour répondre à un intérêt d'utilisateur quand il inclut une heure et/ou une date d'intérêt.

5. Un système de fourniture d'informations selon n'importe lesquelles des revendications précédentes, où le système est configuré pour répondre à un intérêt d'utilisateur quand il inclut des informations personnelles relatives à l'utilisateur, comme un profil représentant ses intérêts et/ou ses intérêts pour des flux spécifiques et/ou des références spatiales sémantiquement marquées pour des localisations comme « maison » et « bureau ».

6. Un système de fourniture d'informations selon n'importe lesquelles des revendications précédentes, où le système évalue une multiplicité de références spatiales comme des codes postaux et/ou des mots-clés et/ou des coordonnées spatiales contenues dans les entrées des flux.

7. Un système de fourniture d'informations selon n'importe lesquelles des revendications précédentes, où le fournisseur des flux attribue une référence spatiale temporelle aux entrées contenues à l'intérieur des flux.

8. Un système de fourniture d'informations selon n'importe lesquelles des revendications précédentes, où le fournisseur des flux attribue des informations de classification aux entrées contenues à l'intérieur des flux.

9. Un système de fourniture d'informations selon n'importe lesquelles des revendications précédentes, où le fournisseur des flux assigne des informations d'étiquetage et/ou des informations relatives à une représentation graphique de telle sorte que l'entrée puisse être représentée sous une forme lisible par un être humain soit textuellement sur une page, soit graphiquement dans une image.

10. Un système de fourniture d'informations selon n'importe lesquelles des revendications précédentes, où le fournisseur source des flux assigne un lien profond aux entrées contenues à l'intérieur des flux de sorte que la forme lisible par un être humain d'une entrée puisse être « liée » à d'autres informations.

11. Un système de fourniture d'informations selon n'importe lesquelles des revendications précédentes, où un moyen est fourni pour stocker les informations dans des catégories et/ou avec des marques associées et/ou avec des attributs associés, et enregistrer des informations qui ont précédemment fait l'objet d'un accès, grâce à quoi le système sélectionne les informations selon des intérêts précédemment enregistrés.

12. Un système de fourniture d'informations selon n'importe lesquelles des revendications précédentes, fonctionnant conjointement avec un système de guidage mobile comprenant une unité de réception mobile (7) destinée à recevoir et à afficher des indications de localisation ; un moyen de traitement situé à distance de ladite unité de réception mobile (7) ; un moyen permettant une communication à distance entre ladite unité et ledit moyen de traitement et un moyen pour déterminer la position spatiale spécifique de l'utilisateur ; **caractérisé en ce que** ledit moyen de traitement évalue la position spatiale spécifique d'utilisateur déterminée avec des critères d'intérêts d'utilisateur afin de fournir à l'utilisateur un accès à un affichage d'indications de localisation et d'informations d'intérêts d'utilisateur.

13. Un système de fourniture d'informations selon la revendication 12, où la communication entre l'unité et le moyen de traitement emploie un moyen pour mettre à jour en temps réel à la fois les informations d'intérêts d'utilisateur et les indications de localisation affichées.

14. Un système de fourniture d'informations selon à la revendication 12 et après, où un moyen est fourni pour permettre à l'utilisateur de bloquer certains affichages.

15. Un système de fourniture d'informations selon la revendication 2, où le système est configuré pour scruter différents flux à des fréquences différentes ; et le système contient un modèle spatial en temps quasi réel (6).

16. Un système de fourniture d'informations selon la revendication 1, où lesdits flux sont des flux RSS (Really Simple Syndication).

17. Un système de fourniture d'informations selon la revendication 1, où lesdits flux sont des flux Atom.
